# EUROPÄISCHE PATENTANMELDUNG

(11) **EP 3 988 352 A1**
(43) Veröffentlichungstag der Anmeldung: **27.04.2022**
(21) Anmeldenummer: 21203149.6
(22) Anmeldetag: 18.10.2021
(51) Int. Cl.: B60G 7/00, B60G 17/019

(54) **VERBUNDLENKER FÜR EIN FAHRWERK EINES KRAFTFAHRZEUGS**

(30) Priorität: 22.10.2020 DE 102020127863
(71) Anmelder: THK Rhythm Automotive GmbH, 40233 Düsseldorf (DE)
(72) Erfinder: Dite, Jan, 40233 Düsseldorf (DE); Krivan, Milos, 40233 Düsseldorf (DE); Schlender, Igor, 40233 Düsseldorf (DE)
(74) Vertreter: Prinz & Partner mbB

(57) **Zusammenfassung**

Die Erfindung betrifft einen Verbundlenker (10) für ein Fahrwerk eines Kraftfahrzeugs, mit einem karosserieseitigen Innenteil (12), das einen Lageraufnahmeabschnitt (18) zur Aufnahme eines karosserieseitigen Lagers aufweist, und einem radträgerseitigen Außenteil (14), das einen Lageraufnahmeabschnitt (32) zur Aufnahme eines radträgerseitigen Lagers aufweist, wobei das Außenteil (14) und das Innenteil (12) getrennte Bauteile sind, die aus unterschiedlichen Materialien bestehen und fest miteinander verbunden sind.

## Beschreibung

Die Erfindung betrifft einen Verbundlenker für ein Fahrwerk eines Kraftfahrzeugs.

Lenker für ein Fahrwerk eines Kraftfahrzeugs sind beispielsweise Quer- oder Längslenker, die dazu dienen, einen Radträger mit der Fahrzeugkarosserie zu verbinden. Im Hinblick auf die nötige Beweglichkeit beim Ein- und Ausfedern des Radträgers sind sowohl zwischen der Karosserie und dem karosserieseitigen Ende des Lenkers als auch zwischen dem Radträger und dem radträgerseitigen Ende des Lenkers üblicherweise Gelenke vorgesehen, beispielsweise Elastomergelenke oder Kugelgelenke.

Die Aufgabe der Erfindung besteht darin, einen Lenker zu schaffen, der sich durch ein sehr gutes Verhältnis von Festigkeit zu Bauteilgewicht auszeichnet.

Erfindungsgemäß ist zu diesem Zweck ein Verbundlenker für ein Fahrwerk eines Kraftfahrzeugs vorgesehen, mit einem karosserieseitigen Innenteil, das einen Lageraufnahmeabschnitt zur Aufnahme eines karosserieseitigen Lagers aufweist, und einem radträgerseitigen Außenteil, das einen Lageraufnahmeabschnitt zur Aufnahme eines radträgerseitigen Lagers aufweist, wobei das Außenteil und das Innenteil getrennte Bauteile sind, die aus unterschiedlichen Materialien bestehen und fest miteinander verbunden sind. Die Erfindung beruht auf dem Grundgedanken, die Materialien für das Innenteil und das Außenteil an die jeweils wirkenden Belastungen anzupassen. Hierdurch ergibt sich insgesamt ein sehr geringes Gewicht für den Verbundlenker, wobei gleichzeitig eine sehr hohe Festigkeit erhalten wird. Ein weiterer Vorteil des erfindungsgemäßen Verbundlenkers besteht in der Modularität, da je nach konkreten Anforderungen unterschiedliche Innenteile und Außenteile miteinander kombiniert werden können, beispielsweise um den Verbundlenker an unterschiedliche Radstände von unterschiedlichen Fahrzeugtypen anzupassen. Weiterhin können die Lageraufnahmeabschnitte relativ zueinander unterschiedlich ausgerichtet werden, wenn das Innenteil mit dem Außenteil verbunden wird, sodass es möglich ist, den Verbundlenker bei an sich identischer Konstruktion sowohl auf der rechten Seite des Fahrzeugs als auch auf der linken Seite einzusetzen.

Gemäß einer Ausführungsform der Erfindung ist vorgesehen, dass der Lageraufnahmeabschnitt des Innenteils eine zylindrische Innenkontur aufweist. Dies ermöglicht es, das karosserieseitige Lager in den Lageraufnahmeabschnitt einzupressen.

Gemäß einer Ausgestaltung der Erfindung ist das Innenteil ein extrudiertes Profilteil, insbesondere aus einer Aluminiumlegierung. Hierdurch können bei geringen Herstellungskosten auch komplizierte Geometrien für das Innenteil erzielt werden, wodurch sich hohe Festigkeitswerte realisieren lassen.

Das Innenteil weist vorzugsweise einen maschinell bearbeiteten Verbindungsabschnitt zur Verbindung mit dem Außenteil auf. Durch die maschinelle Bearbeitung können mit geringem Aufwand Verbindungsgeometrien hergestellt werden, die bei einem extrudierten Profilteil als solches nicht darstellbar sind, beispielsweise eine hülsenförmige Aufnahme für einen Verbindungsabschnitt des Außenteils.

Gemäß einer Ausführungsform der Erfindung ist am Innenteil eine Anbindungsgestaltung vorgesehen, die zur Kopplung mit einem Winkelsensor dient. Mit dem Winkelsensor kann die Position des Verbundlenkers präzise erhalten werden. Die Anbindungsgestaltung kann bereits bei der Herstellung des Innenteils vorgesehen werden, sodass sich ein insgesamt geringer Herstellungsaufwand ergibt.

Gemäß einer Ausgestaltung ist vorgesehen, dass die Anbindungsgestaltung eine extrudierte Öffnung ist, in die ein Anbindungsstift eingesetzt ist. Dieser kann beispielsweise eingepresst oder auch eingeschraubt sein. In jedem Fall sind keine weiteren Bearbeitungsschritte erforderlich, um die Anbindungsgestaltung zu erhalten.

Gemäß einer alternativen Ausgestaltung ist vorgesehen, dass das Innenteil ein Blechbiegeteil aufweist. Mit einem Blechbiegeteil können bei geringen Herstellungskosten vergleichsweise steife Bauteile hergestellt werden, sodass sich die gewünschte hohe Festigkeit des Verbundlenkers ergibt.

Gemäß einer Ausgestaltung der Erfindung ist dabei vorgesehen, dass das Innenteil aus einem einzigen Blechzuschnitt besteht, der zwei tiefgezogene Bereiche aufweist, die zusammen den Lageraufnahmeabschnitt bilden, sowie eine Schweißnaht. Bei dieser Ausgestaltung sind keinerlei Schritte der Montage von zwei Bauteilen aneinander erforderlich, um das Innenteil zu erhalten. Stattdessen kann die nötige Geometrie zur Aufnahme des karosserieseitigen Lagers durch tiefgezogene Abschnitte des Blechzuschnitts erhalten werden.

Das Innenteil besteht vorzugsweise aus einem einzigen Blechzuschnitt, der über mehrere Tiefzieh- und/oder Biege-Operationen in die benötigte Form gebracht wird und den Lageraufnahmeabschnitt darstellt. Im Weiteren kann im Falle von Tiefziehmaterialien, bei denen keine Extrusion für das Einpressen und Tragen des karosserieseitigen Lagers realisiert werden kann, ein Rohrzuschnitt für diese Funktion berücksichtigt werden. Die Kopplung dieses Zuschnitts zum Tiefziehprodukt kann beispielsweise über Schweißnähte erfolgen. In ersterer Ausgestaltung sind keinerlei Schritte der Montage von zwei Bauteilen aneinander erforderlich, um das Innenteil zu erhalten.

Gemäß einer alternativen Ausgestaltung ist dabei vorgesehen, dass das Innenteil einen Körper aufweist, der mit einem Ring fest verbunden ist, der den Lageraufnahmeabschnitt bildet. Diese Ausgestaltung ermöglicht es, das Vorprodukt für den Körper weniger komplex auszuführen. Der Lageraufnahmeabschnitt wird durch den separat ausgeführten Ring gebildet, der dann mit dem Köper verbunden wird, beispielsweise verschweißt.

Der Körper kann als plastisch verformtes Rohr ausgeführt sein, sodass bereits ein in Umfangsrichtung geschlossener Körper verwendet wird, der eine entsprechend hohe Festigkeit hat.

Alternativ kann der Körper ein Blechbiegeteil sein, das ausgehend von einem geeigneten Zuschnitt hergestellt wird.

Das Innenteil kann einen geschlossenen Querschnitt aufweisen, um eine erhöhte Torsionsfestigkeit bereitzustellen. In diesem Fall sind die einander gegenüberliegenden Ränder des Blechzuschnitts miteinander verschweißt.

Es kann auch sein, dass das Innenteil einen C-förmigen Querschnitt aufweist, sodass sich insgesamt ein geringeres Gewicht ergibt.

Das Innenteil und das Außenteil können grundsätzlich auf jede beliebige, geeignete Weise miteinander verbunden sein, insbesondere stoffschlüssig und/oder formschlüssig. Beispielsweise können die beiden Teile miteinander verklebt, verlötet, verschweißt, vernietet, verpresst oder vercrimpt werden. Es sind auch Kombinationen dieser Verbindungsarten möglich. Beispielsweise kann eines der Bauteile mit Vorsprüngen oder anderen Unebenheiten versehen sein, die sich beim Verpressen oder Vercrimpen in das Material des anderen Bauteils eingraben. Ebenso ist es möglich, dass eines der beiden Bauteile mit Vorsprüngen versehen ist, die in Öffnungen des anderen Bauteils mechanisch eingreifen, und dass zusätzlich eine Press- oder Crimpverbindung vorgesehen ist.

Gemäß einer Ausgestaltung der Erfindung weist das Innenteil eine Crimphülse auf, in die das Außenteil eingesetzt ist. Eine solche Hülse ermöglicht es, den Abstand der Mittelpunkte der beiden Lageraufnahmeabschnitte präzise zueinander einzustellen, bevor das Innenteil mit dem Außenteil verbunden wird. Weiterhin ist es möglich, die Ausrichtung der beiden Lageraufnahmeabschnitte einzustellen, indem das Innenteil relativ zum Außenteil verdreht wird, bevor die beiden Teile fest miteinander verbunden werden.

Das Außenteil besteht dabei vorzugsweise aus Metall, während für das Innenteil Metallbleche geeignet sind, aber auch Kunststoffmaterialien, Faserverbundwerkstoffe, etc.

Das Außenteil ist vorzugsweise als Schmiedeteil ausgeführt, sodass sich eine sehr hohe Bauteilfestigkeit ergibt.

Das Außenteil kann auch als Gussteil herstellt werden oder durch Kaltumformung.

Vorzugsweise weist das Außenteil einen maschinell bearbeiteten Verbindungsabschnitt zur Anbindung an das Innenteil auf, sodass sich eine hohe Präzision ergibt.

Die oben genannte Aufgabe wird auch gelöst durch eine Baugruppe aus zwei Verbundlenkern der vorstehend genannten Art, wobei die Ausrichtung des karosserieseitigen Lageraufnahmeabschnitts des einen Verbundlenkers relativ zu dessen radträgerseitigem Lageraufnahmeabschnitt spiegelbildlich ist zur Ausrichtung des karosserieseitigen Lageraufnahmeabschnitts des anderen Verbundlenkers relativ zu dessen radträgerseitigem Lageraufnahmeabschnitt. Die spiegelbildlichen Ausrichtungen können mit geringem Aufwand dadurch hergestellt werden, dass die Außenteile relativ zu den Innenteilen in der gewünschten Richtung verdreht werden, bevor die beiden Bauteile fest miteinander verbunden werden. Auf diese Weise kann mit an sich identischen Bauteilen sowohl ein rechter Verbundlenker als auch ein linker Verbundlenker erhalten werden.

Die Erfindung wird nachfolgend anhand verschiedener Ausführungsformen beschrieben, die in den beigefügten Zeichnungen dargestellt sind. In diesen zeigen:
- Figur 1 in einer perspektivischen, teilgeschnittenen Ansicht einen Verbundlenker gemäß einer ersten Ausführungsform;
- Figur 2 eine Vorderansicht des Verbundlenkers von Figur 1;
- Figur 3 in einer perspektivischen Ansicht einen Verbundlenker gemäß einer zweiten Ausführungsform;
- Figur 4 in einer perspektivischen Ansicht einen Verbundlenker gemäß einer dritten Ausführungsform;
- Figur 5 in einer perspektivischen Ansicht einen Verbundlenker gemäß einer vierten Ausführungsform;
- Figur 6 in einer perspektivischen Ansicht einen Verbundlenker gemäß einer fünften Ausführungsform; und
- Figur 7 einen Schnitt durch einen Verbindungsabschnitt des Verbundlenkers von Figur 6.

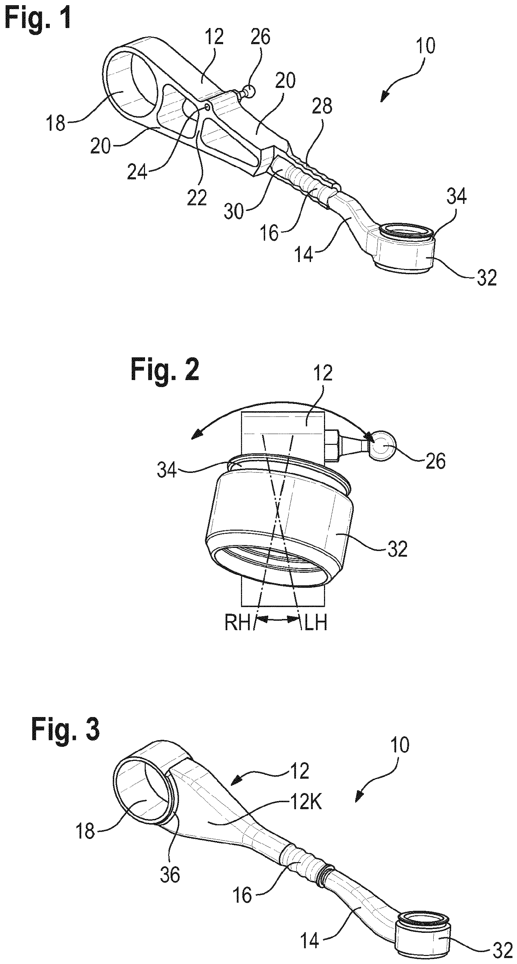

In Figur 1 ist ein Verbundlenker 10 gezeigt, der ein Fahrwerkslenker für ein Fahrwerk eines Kraftfahrzeugs ist.

Der Verbundlenker 10 weist ein Innenteil 12 auf, das den karosserieseitigen Abschnitt des Verbundlenkers darstellt, also den Teil, der dafür vorgesehen ist, mit der Fahrzeugkarosserie verbunden zu werden.

Der Verbundlenker 10 weist weiterhin ein Außenteil 14 auf, also den Teil, der dafür vorgesehen ist, mit dem Radträger verbunden zu werden.

Die beiden Teile 12, 14 sind in einem Verbindungsabschnitt 16 fest miteinander verbunden.

Das Innenteil 12 weist einen Lageraufnahmeabschnitt 18 auf, der dafür vorgesehen ist, ein karosserieseitiges Lager aufzunehmen. Der Lageraufnahmeabschnitt 18 weist hier eine zylindrische Innenkontur auf.

Im gezeigten Ausführungsbeispiel ist das Innenteil 12 ausgehend von einem extrudierten Profil hergestellt, indem Abschnitte mit der gewünschten Breite abgeschnitten werden. Hierdurch lässt sich mit vergleichsweise geringem Herstellungsaufwand eine vergleichsweise aufwändige, belastungsangepasste Geometrie erzielen. Im gezeigten Ausführungsbeispiel lässt sich der kreiszylindrische Lageraufnahmeabschnitt 18 einstückig mit außenliegenden "Bändern" 20 und einem Versteifungssteg 22 erhalten.

Als Teil des extrudierten Profilteils ist auch eine Anbindungsgestaltung 24 für einen Anbindungsstift 26 vorgesehen. Die Anbindungsgestaltung 24 ist hier als in Querrichtung durchgehende Öffnung ausgeführt. Der Anbindungsstift 26 dient dazu, die Verbindung zu einem Winkelsensor herzustellen, mit dem die Position des Verbundlenkers 10 relativ zur Fahrzeugkarosserie erfasst werden kann.

Der Anbindungsstift 26 kann in die Anbindungsgestaltung 24 einfach mit einer Presspassung eingepresst werden oder auch mit einem selbstschneidenden Gewinde versehen sein, sodass er dort mit geringem Aufwand fest verankert werden kann.

Auf der Seite des Innenteils 12 besteht der Verbindungsabschnitt 16 aus einer Hülse 28, die durch maschinelles Bearbeiten des Profilteils hergestellt ist. Die Mittelachse der hierdurch hergestellten Hülse erstreckt sich entlang der Längsachse des Innenteils 12. Beispielsweise kann die Hülse gebohrt sein.

In der Hülse 28 ist ein zapfenartiges Ende 30 des Außenteils 14 aufgenommen. Das Ende 30 ist auf seiner Außenfläche mit mehreren Rippen, Rinnen, Nuten oder ähnlichen Gestaltungen versehen, um eine zuverlässige Verbindung mit dem Innenteil 12 herstellen zu können.

Am anderen Ende weist das Außenteil 14 einen radträgerseitigen Lageraufnahmeabschnitt 32 auf, der hier ebenfalls ringförmig mit einer kreiszylindrischen Innenkontur ausgeführt ist.

Zusätzlich ist einstückig mit dem Lageraufnahmeabschnitt 32 eine umlaufende Nut 34 zur Befestigung eines Dichtungsbalgs ausgebildet.

Das Außenteil 14 ist hier als Schmiedeteil aus einer geeigneten Metalllegierung ausgeführt.

Das Innenteil 12 und das Außenteil 14 werden miteinander verbunden, indem das Ende 30 des Außenteils 14 in die Hülse 28 des Innenteils 12 eingesteckt wird und anschließend die Hülse 28 von außen nach innen verpresst oder vercrimpt wird. Dadurch wird eine formschlüssige Verbindung zwischen der Hülse 28 des Innenteils und dem Ende 30 des Außenteils erzielt.

Bevor die beiden Teile miteinander verpresst werden, kann eine Feinjustierung des Abstands der Mittelachsen der Lageraufnahmeabschnitte 18, 32 dadurch vorgenommen werden, dass das Ende 30 mehr oder weniger weit in die Hülse 28 eingeschoben wird. Weiterhin können die Mittelachsen der beiden Lageraufnahmeabschnitte 18, 32 in der gewünschten Weise relativ zueinander eingestellt werden. Bei der gezeigten Ausführungsform stehen die beiden Mittelachsen (in einer Projektion entlang der Längsachse des Verbundlenkers 10) etwa senkrecht aufeinander.

Wie in Figur 2 im Detail zu sehen ist, kann auch die Ausrichtung der Mittelachsen relativ zueinander so gewählt werden, dass alleine durch leichtes Verdrehen des Außenteils 14 relativ zum Innenteil 12 entweder ein rechtsseitiger Verbundlenker 10 oder ein linksseitiger Verbundlenker 10 erhalten wird, also ein Verbundlenker, der auf der rechten Seite des Fahrwerks eingesetzt wird oder auf der linken Seite. In Figur 2 ist das radträgerseitige Lagerteil 32 in der Ausrichtung für die rechtsseitige Anordnung gezeigt (mit der Mittelachse RH), während gestrichelt auch die Mittelachse LH für den linksseitigen Verbundlenker dargestellt ist. Es ergibt sich somit ein Herstellungskostenvorteil, da ein und dasselbe Innenteil 12 und Außenteil 14 dafür verwendet werden kann, die unterschiedlichen Verbundlenker für entgegengesetzte Seiten des Fahrwerks herzustellen.

In Figur 3 ist ein Verbundlenker 10 gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

Der wesentliche Unterschied zwischen der ersten und der zweiten Ausführungsform besteht darin, dass bei der zweiten Ausführungsform das Innenteil 12 des Verbundlenkers 10 ausgehend von zwei Bauteilen hergestellt ist, die fest miteinander verbunden sind.

Das Innenteil 12 weist einen Körper 12K auf, der hier aus Blech besteht. Mit dieser ist ein Ring, beispielsweise ein Rohrabschnitt, verbunden, der den karosserieseitigen Lageraufnahmeabschnitt 18 bildet. Die beiden Bauteile sind hier mittels einer Schweißnaht 36 miteinander verbunden.

Der Körper 12K kann ein tiefgezogenes, gebogenes und geeignet verschweißtes Blechbiegeteil sein. Es ist auch möglich, dass der Körper 12K ausgehend von einem Rohrabschnitt hergestellt ist, der geeignet verformt ist, beispielsweise mittels eines Innenhochdruckumformverfahrens an dem Ende aufgeweitet, an dem der Lageraufnahmeabschnitt 18 angebracht ist.

Auch der Ring, der den Lageraufnahmeabschnitt 18 bildet, kann aus Blech ausgeführt sein.

Auch bei dieser Ausführungsform werden das Innenteil 12 und das Außenteil 14 mittels des Verbindungsabschnitts 16 miteinander verpresst.

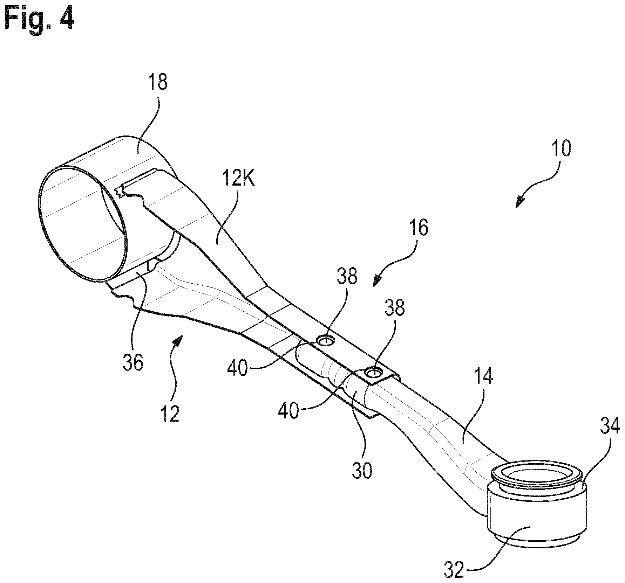

In Figur 4 ist eine dritte Ausführungsform des Verbundlenkers 10 gezeigt. Für die von den vorhergehenden Ausführungsformen bekannten Bauteile werden dieselben Bezugszeichen verwendet, und es wird insoweit auf die obigen Erläuterungen verwiesen.

Der Unterschied zwischen der dritten und der zweiten Ausführungsform besteht darin, dass der Körper 12K des Innenteils 12 nicht als in Umfangsrichtung geschlossenes Profil ausgeführt ist, sondern C-förmig. Hinsichtlich der Grundkonstruktion, bei der der Körper 12K als Blechbiegeteil ausgeführt ist, der mit dem den Lageraufnahmeabschnitt 18 bildenden Ring mittels einer Schweißnaht 36 verbunden ist, entsprechen sich die dritte und die zweite Ausführungsform.

Ein weiterer Unterschied zwischen der dritten und der zweiten Ausführungsform besteht hinsichtlich des Verbindungsabschnitts 16.

Das vom Lageraufnahmeabschnitt 32 abgewandte Ende 30 des Außenteils 14 ist hier mit insgesamt vier Vorsprüngen 38 versehen, die in geeignet dimensionierte Öffnungen 40 eingreifen, die im Verbindungsabschnitt des Körpers 12K ausgeführt sind.

Der Körper 12K ist im Verbindungsabschnitt 16 um das Ende 30 des Außenteils 14 herumgelegt und geeignet gegen dieses verpresst, sodass sich eine mechanisch zuverlässige Verbindung ergibt, die durch den Formschluss zwischen den Vorsprüngen 38 und den Öffnungen 40 unterstützt wird.

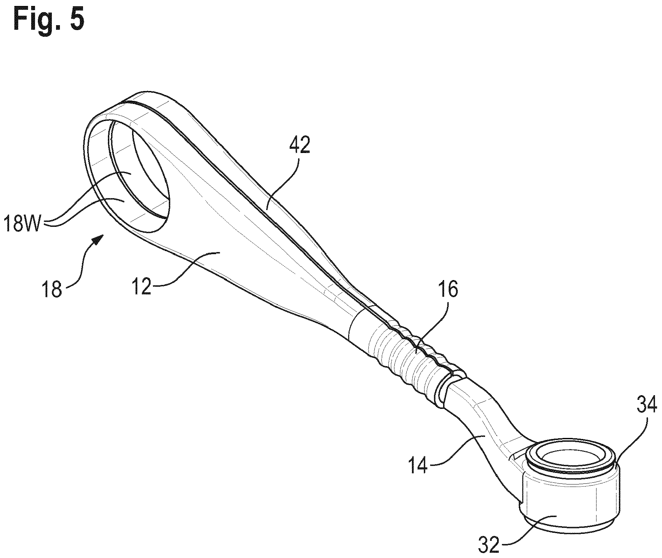

In Figur 5 ist eine vierte Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Bei der vierten Ausführungsform ist das Innenteil 12 ausgehend von einem einzigen Blechzuschnitt hergestellt, das geeignet tiefgezogen ist, um die innenliegende Wandung 18W des Lageraufnahmeabschnitts 18 zu bilden. Der Blechzuschnitt wird geeignet gebogen und dann mittels einer sich in Längsrichtung erstreckenden Schweißnaht 42 geschlossen.

Auch bei der vierten Ausführungsform wird der Verbindungsabschnitt 16 verwendet, der hier als Crimp-oder Pressabschnitt ausgeführt ist.

Alternativ zum Vercrimpen oder Verpressen kann auch vorgesehen sein, dass die beiden Teile 12, 14 miteinander verlötet oder verklebt werden. Es ist auch denkbar, eine Schweißverbindung zu verwenden.

Abweichend von den hier erläuterten Ausgestaltungen, bei denen das Innenteil 12 aus Metallblech besteht, ist grundsätzlich auch denkbar, Kunststoff oder Faserverbundwerkstoffe zu verwenden. Da diese nicht plastisch verformt werden können, muss der Verbindungsabschnitt 16 dann in anderer Weise ausgeführt werden, beispielsweise als Klebeverbindung.

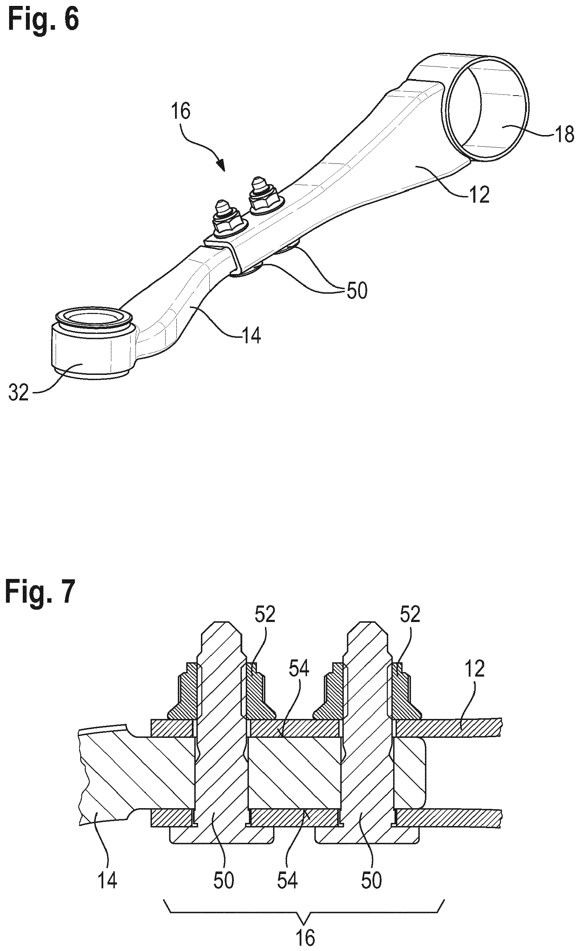

In den Figuren 6 und 7 ist eine fünfte Ausführungsform gezeigt. Für die von den vorhergehenden Ausführungsformen bekannten Bauteile werden dieselben Bezugszeichen verwendet, es es wird insoweit auf die obigen Erläuterungen verwiesen.

Die fünfte Ausführungsform basiert auf der dritten Ausführungsform, unterscheidet sich von dieser aber hinsichtlich des Verbindungsabschnittes 16.

Bei der fünften Ausführungsform werden das Innenteil 12 und das Außenteil 14 durch eine Schraubverbindung miteinander verbunden.

Im gezeigten Ausführungsbeispiel werden zwei Schraubbolzen 50 verwendet, die sich im Verbindungsabschnitt 16 durch die beiden Blechlagen des Innenteils 12 und durch das Außenteil 14 erstrecken und auf die jeweils eine Mutter 52 aufgeschraubt ist. Auf diese Weise wird das Außenteil 14 im Innenteil 12 fest eingespannt.

Um die mechanische Verbindung zwischen dem Innenteil 12 und dem Außenteil 14 zu verbessern, sind in den Schaft des Außenteils 14 werden zwei parallele Schlüsselflächen 54 eingebracht (z.B. eingefräst), die als Anlagefläche für das Blechteil des Innenteils 12 dienen. Durch unterschiedliche Fräsungen können auch hier Verbundlenker für die linke und rechte Seite erzeugt werden. Durch Verschiebung der Bohrungen der Schrauben 50 (in Innenteil 12 und/oder im Außenteil 14) können unterschiedliche Längen des Verbundlenkers erzeugt werden.

## Patentansprüche

1. Verbundlenker (10) für ein Fahrwerk eines Kraftfahrzeugs, mit einem karosserieseitigen Innenteil (12), das einen Lageraufnahmeabschnitt (18) zur Aufnahme eines karosserieseitigen Lagers aufweist, und einem radträgerseitigen Außenteil (14), das einen Lageraufnahmeabschnitt (32) zur Aufnahme eines radträgerseitigen Lagers aufweist, wobei das Außenteil (14) und das Innenteil (12) getrennte Bauteile sind, die aus unterschiedlichen Materialien bestehen und fest miteinander verbunden sind.

2. Verbundlenker (10) nach Anspruch 1, **dadurch gekennzeichnet, dass** der Lageraufnahmeabschnitt (18) des Innenteils (12) eine zylindrische Innenkontur aufweist.

3. Verbundlenker (10) nach einem der vorhergehenden Ansprüche, **dadurch gekennzeichnet, dass** das Innenteil (12) ein extrudiertes Profilteil ist, insbesondere aus einer Aluminiumlegierung.

4. Verbundlenker (10) nach einem der vorhergehenden Ansprüche, **dadurch gekennzeichnet, dass** das Innenteil (12) einen maschinell bearbeiteten Verbindungsabschnitt (28) zur Verbindung mit dem Außenteil (14) aufweist.

5. Verbundlenker (10) nach einem der vorhergehenden Ansprüche, **dadurch gekennzeichnet, dass** am Innenteil (12) eine Anbindungsgestaltung (24) vorgesehen ist, die zur Kopplung mit einem Winkelsensor dient.

6. Verbundlenker (10) nach Anspruch 5, **dadurch gekennzeichnet, dass** die Anbindungsgestaltung (24) eine extrudierte Öffnung ist, in die ein Anbindungsstift (26) eingesetzt ist.

7. Verbundlenker (10) nach einem der Ansprüche 1 und 2, **dadurch gekennzeichnet, dass** das Innenteil (12) ein Blechbiegeteil aufweist.

8. Verbundlenker (10) nach Anspruch 7, **dadurch gekennzeichnet, dass** das Innenteil (12) aus einen einzigen Blechzuschnitt besteht, der zwei tiefgezogene Bereiche (18W) aufweist, die zusammen den Lageraufnahmeabschnitt (18) bilden, sowie eine Schweißnaht (42).

9. Verbundlenker (10) nach Anspruch 8, **dadurch gekennzeichnet, dass** das Innenteil (12) einen Körper (12K) aufweist, der mit einem Ring (18) fest verbunden ist, der den Lageraufnahmeabschnitt (18) bildet.

10. Verbundlenker (10) nach Anspruch 9, **dadurch gekennzeichnet, dass** der Körper (12K) ein plastisch verformtes Rohr ist.

11. Verbundlenker (10) nach Anspruch 10, **dadurch gekennzeichnet, dass** der Körper (12K) ein Blechbiegeteil ist.

12. Verbundlenker (10) nach Anspruch 11, **dadurch gekennzeichnet, dass** das Innenteil (12) einen geschlossenen Querschnitt aufweist.

13. Verbundlenker (10) nach Anspruch 11, **dadurch gekennzeichnet, dass** das Innenteil (12) einen C-förmigen Querschnitt aufweist.

14. Verbundlenker (10) nach einem der vorhergehenden Ansprüche, **dadurch gekennzeichnet, dass** das Innenteil (12) und das Außenteil (14) stoffschlüssig miteinander verbunden sind.

15. Verbundlenker (10) nach einem der vorhergehenden Ansprüche, **dadurch gekennzeichnet, dass** das Innenteil (12) und das Außenteil (14) formschlüssig miteinander verbunden sind.

16. Verbundlenker (10) nach einem der vorhergehenden Ansprüche, **dadurch gekennzeichnet, dass** das Innenteil (12) eine Crimphülse aufweist, in die das Außenteil (14) eingesetzt ist.

17. Verbundlenker (10) nach einem der vorhergehenden Ansprüche, **dadurch gekennzeichnet, dass** Vorsprünge (38) am Innenteil (12) oder am Außenteil (14) vorgesehen sind, die in Öffnungen (40) im andere Teil aufgenommen sind.

18. Verbundlenker (10) nach einem der vorhergehenden Ansprüche, **dadurch gekennzeichnet, dass** das Außenteil (14) ein Schmiedeteil ist.

19. Verbundlenker (10) nach einem der vorhergehenden Ansprüche, **dadurch gekennzeichnet, dass** das Außenteil (14) einen maschinell bearbeiteten Verbindungsabschnitt (16) zur Anbindung an das Innenteil (12) aufweist.

20. Baugruppe aus zwei Verbundlenker (10) nach einem der vorhergehenden Ansprüche, **dadurch gekennzeichnet, dass** die Ausrichtung des karosserieseitigen Lageraufnahmeabschnitts (18) des einen Verbundlenkers (10) relativ zu dessen radträgerseitigem Lageraufnahmeabschnitt (32) spiegelbildlich ist zur Ausrichtung des karosserieseitigen Lageraufnahmeabschnitt (18) des anderen Verbundlenkers (10) relativ zu dessen radträgerseitigem Lageraufnahmeabschnitt (32).
